# EUROPÄISCHE PATENTSCHRIFT

(11) **EP 0 829 006 B1**
(45) Veröffentlichungstag und Bekanntmachung des Hinweises auf die Patenterteilung: **20.08.2003**
(21) Anmeldenummer: 96915950.8
(22) Anmeldetag: 24.05.1996
(51) Int. Cl.: G01N 21/64

(54) **VERFAHREN ZUR HERSTELLUNG EINES SENSITIVEN EINSCHICHTSYSTEMS ZUR MESSUNG DER KONZENTRATION VON ANALYTEN UND EIN MIT DIESEM VERFAHREN HERGESTELLTES SYSTEM**
PROCESS FOR PRODUCING A SENSITIVE SINGLE-LAYER SYSTEM FOR MEASURING THE CONCENTRATION OF ANALYTES AND A SYSTEM PRODUCED BY SAID PROCESS
PROCEDE DE REALISATION D'UN SYSTEME MONOCOUCHE SENSIBLE POUR MESURER LA CONCENTRATION D'ANALYTES ET SYSTEME OBTENU A L'AIDE DUDIT PROCEDE

(30) Priorität: 27.05.1995 DE 19519496
(43) Veröffentlichungstag der Anmeldung: 18.03.1998
(73) Patentinhaber: Kirschner, Uwe, 01139 Dresden (DE); Lau, Matthias, 01307 Dresden (DE); Hannemann, Birgit, 09126 Chemnitz (DE); Tamachkiarowa, Adriana, 8800 Sliven (BG)
(72) Erfinder: Kirschner, Uwe, 01139 Dresden (DE); Lau, Matthias, 01307 Dresden (DE); Hannemann, Birgit, 09126 Chemnitz (DE); Tamachkiarowa, Adriana, 8800 Sliven (BG)
(74) Vertreter: Pfenning, Meinig & Partner GbR
(86) Internationale Anmeldenummer: DE9600915
(87) Internationale Veröffentlichungsnummer: WO96037768

(56) Entgegenhaltungen:
- EP-A- 0 417 535
- WO-A-94/10553
- AT-B- 390 678

## Beschreibung

Die Erfindung betrifft ein Verfahren zur Herstellung eines sensitiven Einschichtsystems zur optischen Bestimmung einer Konzentration eines Analyten, wie beispielsweise Sauerstoff, wobei das Analyt in flüssigem oder gasförmigem Aggregatzustand oder in gelöster Form untersucht werden kann, durch Absorption, Lumineszenz oder Lumineszenzlöschung eines für das Analyt sensitiven Indikators, der vorzugsweise im optischen Strahlengang dauerhaft immobilisiert ist.

Des weiteren betrifft die Erfindung ein nach diesem Verfahren hergestelltes sensitives Einschichtsystem.

Systeme und Verfahren zur Bestimmung des O₂-Partialdruckes bzw. der O₂-Konzentration durch dynamische Lumineszenzlöschung von Ruthenium - α - Diaminkomplexen unter Verwendung von Lichtwellenleitern wurden bereits in EP 0 190 829 und EP 190 830, des weiteren in EP 0 313 655 und EP 0 344 313 und auch in DE 33 46 810, DE 37 02 210, DE 41 08 808 beschrieben.

Als Rutheniumkomplex, dessen Phosphoreszenz durch Sauerstoff löschbar ist, werden dabei [ Ru(bipy)₃] ²⁺, [ Ru(phen)₃] ²⁺ oder [ Ru(4,7ph₂phen)₃] ²⁺ in Verbindung mit Chlorid oder Perchlorat als Gegenion eingesetzt. Diese Indikatorfarbstoffe werden in für Sauerstoff permeablen Polysiloxanmatrixmaterialien immobilisiert und darin auf Glasfasern aufgebracht. Es werden Polysiloxane mit unterschiedlichen Substituenten und Zusätzen sowie bestimmte Schichtfolgen oder Schutzmenbranen vorgeschlagen. Des weiteren ist auch eine Anordnung des Indikator-Matrix-Systems auf die Glasfaser, die auch unter einem bestimmten Winkel angeschliffen sein kann, genannt.

In EP 190 829 werden eine Vielzahl von Weichmachern als Zusätze zum Matrixmaterial, das sich hier auf der unter einem Winkel von 20° bis 30° angeschliffenen Faser befindet, vorgeschlagen. Wie in EP 190 830 beschrieben, kann das Indikator-Matrix-System teilweise auch den optischen Mantel der Faser darstellen. Mit EP 0 313 655 = WO 88/00339 wird ohne Festlegung auf ein bestimmtes Material ein optisch transparentes Matrixmaterial vorgeschlagen, auf das der Indikator adsorbiert oder in das dieser immobilisiert ist.

In EP 0 344 313 wird eine Schichtfolge aus transparentem Substrat, Indikator und gaspermeabler Membran vorgeschlagen. Gemäß DE 33 46 810 werden neben einer Vielzahl von Indikatoren, darunter auch Rutheniumverbindungen, und Matrixpolymeren, darunter auch Polysiloxane, spezielle Formen der Matrix, wie Lamellen, Kugeln und Filme, oder auch feste Zusätze wie Silikagel, vorgeschlagen. Außerdem werden verschiedene Einbringmethoden des Indikators in die Matrix beschrieben, wie Eindiffusion, mechanisches Vermischen oder kovalentes Verbinden sowie zusätzliche Schutzschichten genannt. Mit der DE-PS 37 02 210 wird die Verwendung eines 2-Komponenten-Silikonpolymer beschrieben.

Mit der DE 41 08 808 ist schließlich eine konvex auf ein transparentes Substrat gespannte indikatorhaltige Silikonmembran vorgeschlagen worden.

Weiter ist in der DE 31 48 830 eine Vorrichtung zur Bestimmung der Sauerstoffkonzentration in Gasen, Flüssigkeiten und Geweben beschrieben, bei der eine einkörnige Schicht auf einem durchsichtigen Träger mit einer Haft- oder Klebeschicht gebildeten lumineszierenden Oberfläche vorhanden ist, wobei durch Bestrahlung mit Licht einer bestimmten Wellenlänge ein auswertbares Signal erreicht werden soll. Die einkörnige Schicht soll hierbei aus einem Luminiszenzfarbstoff selbst oder einem diesen Farbstoff adsorbierenden inerten Träger, wie Kieselgel oder einem anderen wasserabstoßenden Kunststoff gebildet sein.

In der GB 1 190 583 wird ein Gassensor benannt, bei dem ein lumineszierender Stoff in ein permaeables oder poröses Trägermatrixmaterial aufgenommen ist, wobei das Matrixmaterial bevorzugt ein natürliches oder synthetisches Polymer oder poröses Glas ist.

Aus der EP 0 417 535 kann man einen optischen Sauerstoffsensor entnehmen, bei dem Sauerstoffindikatormoleküle in einen Polymer eingebracht werden. Als Beispiel für ein solches Polymer ist dort Polydimethylsiloxan genannt, das als Träger für die Sauerstoffindikatoren verwendet werden soll. Die verwendeten Polymere werden dann in einem Lösungsmittel gelöst, das die Sauerstoffindikatoren enthält. Die Lösung wird dann in einer dünnen Schicht auf das Substrat aufgebracht und ausgehärtet, wobei nur indirekt Einfluß auf die ausgebildete Schichtdicke genommen werden kann und somit nicht immer reproduzierbare Ergebnisse erreichbar sind. Bei dem in EP 0 244 394 beschriebenen Sensorelement zur Bestimmung von Stoffkonzentrationen in gasförmigen und flüssigen Proben wird eine Trägerschicht und eine Indikatorschicht mit mindestens einer Indikatorsubstanz genannt. Dabei soll auf die Trägerschicht mindestens ein fotoempfindliches Element aufgebracht werden.

Eine Faseroptik für die Bestimmung von Paramtern in Fluiden ist in der WO 94/10553 beschrieben. Dabei wird ein fluoreszierender Farbstoff aus einer Lösung auf einen festen Träger adsorbiert und mit einem flüssigen Silikon vermischt auf einen Träger gegeben, dabei kann als Silikon beispielsweise Polydimethylphenylsiloxan oder nicht ausgehärtetes Polydimethylsiloxan neben anderen verwendet werden. Die Indikatormatrix enthält weiter Indikatormoleküle auf einem Träger. Eine permeable Membran schützt die Indikatormatrix und der Träger enthält zusätzlich poröse Glaspartikel oder ein auf Kieselgel basierendes poröses Material oder andere poröse Glaspartikel und ein Trägerpolymer eines nichtionischen Geles. Als möglicher Indikator wird dabei Ru(1,10-phenanthroline) Chlorid vorgeschlagen.

Bei dem in der AT 390 678 beschriebenen Sensorelement zur Bestimmung von Stoffkonzentrationen wird die Verwendung einer aus Polymer bestehenden Indikatorschicht mit einem Fluoreszenzindikator vorgeschlagen. Die Indikatorschicht soll aus einer porösen Glasschicht bestehen, in die die Indikatorsubstanz immobilisiert ist. Die Indikatorschicht kann dabei eine poröse Glasschicht oder eine aufgespinnte oder aufgewalzte Silikonschicht sein, in der die Indikatorsubstanz vorliegt.

Ähnliches wird auch in der EP 0 578 630 beschrieben, wobei dort die Sensormembran eines optischen Sensors zur Bestimmung eines physikalischen oder chemischen ^Parameters einer Probe ebenfalls eine Polymermatrix mit einer immobilisierten Indikatorsubstanz aufweisen soll.

Bei dem in der EP 0 354 204 beschriebenen optischen Sensor werden Trägerpartikel aus Kieselgelkügelchen vorgeschlagen, die mit einem Fluoreszenzindikator irreversibel gebunden werden.

Die mögliche Verwendung eines Adsorbens, wie Kieselgel, an den ein heterozyklischer organischer Fluoreszenzfarbstoff adsorbiert ist, kann man der DE 28 23 318 entnehmen.

Von M. Lippitsch ist ein faseroptischer-Sauerstoff-Sensor in: Lippitsch, Max E., et.al.: Fibre-Optic oxygen Sensor With The Fluorescence Decay Time As The Information Carrier. In: Analytica Chimica Acta, 205, 1988, S.1 bis 6, beschrieben.

Die Ausnutzung der Lumineszenzänderung für einen Sauerstoffsensor, ist ebenfalls einem Artikel von Wenying; Xu, et.al.: Oxygen Sensors Based on Luminescence Quenching: Interactions of Metal Complexes with the Polymer Supports. In: Anal. Chem. 1934, 66, S. 4133-4141 zu entnehmen. Dabei wird vorgeschlagen, den Sauerstoffeinfluß auf [Ru(Ph₂phen)₃] Cl₂(Ph₂phen=4,7-diphenyl-1,10-phenanthroline) in Verbindung mit einem Polymer, wie beispielsweise Polydimethylsiloxan einzusetzen. Zusätzlich soll Kieselgel zugegeben werden, um Einfluß auf die Sensoreigenschaften nehmen zu können.

Rutheniumverbindungen sind im allgemeinen wegen ihrer großen Stokes Shift (großer Abstand zwischen Anregung und Emission) sowie der relativ langwelligen Anregung und Emission vorteilhaft für den genannten Anwendungsfall geeignet und sind in diesem Zusammenhang auch schon umfangreich in der Literatur beschrieben. [s. u. a. J. R. Bacon, K. N. Demas: Determination of Oxygen Concentrations by Luminescence Quenching of a Polymer-Immobilized Transition-Metal Complex; Anal. Chem. 59, 2780 85, 1987].

Polysiloxane sind die Polymere, die die größte Permeabilität für Sauerstoff besitzen [s. u. a. S. Egli, A. Ruf, A. Buck; Gastrennung mittels Membranen; Swiss. Chem. 6, 89 126, 1984].

Von großer Bedeutung für den praktischen Einsatz derartiger Sensoren ist dabei zunächst eine ausreichende Beständigkeit der Indikator-Matrix-Systeme. Dies ist bei der Bindung des Indikators lediglich an die Oberfläche eines Trägers nicht ausreichend gegeben. Des weiteren müssen kurze und unter verschiedenen Exemplaren von Applikatoren reproduzierbare Ansprechzeiten erreichbar sein. Die Ansprechzeiten nehmen, auch bei Polymeren mit guter Sauerstoffpermeabilität, mit zunehmender Schichtdicke oder zusätzlichen Schutzschichten signifikant zu.

Es ist daher Aufgabe der Erfindung, ein Verfahren zur Herstellung und ein sensitives Einschichtsystem zur Messung der Konzentration oder des Partialdruckes von Analyten vorzuschlagen, womit ein reproduzierbares und sehr kurzes Ansprechverhalten erreichbar wird.

Erfindungsgemäß wird diese Aufgabe durch die im Anspruch 1 genannten Merkmale für das Verfahren und die Merkmale des Anspruchs 4 für das Einschichtsystem gelöst. Vorteilhafte Ausgestaltungsformen und Weiterbildungen der Erfindung ergeben sich bei Verwendung der in den untergeordneten Ansprüchen genannten Merkmale.

Erfindungsgemäß wird das sensitive Einschichtsystem so hergestellt, daß die Fluoreszenzindikatoren an einen Füllstoff adsorbiert werden und im Anschluß daran mit einem für das zu bestimmende Analyt permeablen Matrixmaterial eine Mischung erzeugt wird. Das erzeugte Gemisch wird dann unter Druckeinwirkung vorteilhaft mit einem Anpreßdruck von 12 bis 20 x 10⁴ Pa, vorzugsweise 15 x 10⁴ Pa auf ein Substrat aufgepreßt, wobei die Schichtdicke abhängig vom verwendeten Anpreßdruck ausgebildet wird. Die so aufgebrachte sensitive Schicht wird polymerisiert, polykondensiert oder ausgehärtet, wobei dies bevorzugt in einer zu verwendenden Preßform erfolgt. Durch Quellung in einer Fluoreszenzindikatorlösung wird die Schicht zusätzlich homogenisiert.

Für die Quellung des permeablen Matrixmaterials, das bevorzugt Polydimethylsiloxan ist, wird eine fluoreszenzindikatorhaltige Methylenchloridlösung mit einer 10⁻¹ bis 10⁻⁶, vorzugsweise 10⁻³ bis 10⁻⁴ molaren Konzentration verwendet. Das so hergestellte sensitive Einschichtsystem, weist in der sensitiven Schicht eine Gesamtkonzentration der Fluoreszenzindikatoren in der permeablen Matrix von 10⁻¹ bis 10⁻⁶ mol/l, bevorzugt 10⁻² bis 10⁻³ mol/l auf. Weiter ist in der Matrix ein Füllstoff mit einem Gewichtsanteil von 5 bis 65 Gew.%, bevorzugt 20 bis 30 Gew.% enthalten. Als Füllstoff sollte dabei in vorteilhafter Weise Kieselgel oder poröses Glas verwendet werden, an das die Fluoreszenzindikatoren adsorbiert werden.

Für die Fluoreszenzindikatoren werden vorteilhaft ein Ruthenium - Diaminkomplexe verwendet, der bevorzugterweise Ru(4,7 ph₂phen)₃ Cl₂ x 5 H₂O sein kann und besonders für die Bestimmung der Sauerstoffkonzentration geeignet ist.

Ein sauerstoffpermeables Matrixmaterial ist beispielsweise Polysiloxan und vorzugsweise Polydimethylsiloxan.

Das Substratmaterial kann ein optisch transparentes oder reflektierendes Material sein und in verschiedenen Formen Anwendung finden, wobei die sensitive Schicht entsprechend der Meßaufgabe auf dem Substrat aufgebracht wird.

Das erfindungsgemäß hergestellte und ausgebildete sensitive Einschichtsystem kann für die Prozeßüberwachung in den verschiedensten Bereichen der Technik und Medizin eingesetzt werden, um die Konzentration des Analyten, insbesondere des Sauerstoffes in nahezu beliebigen Fluiden, Stoffen, Stoffgemischen zu überwachen und die Meßsignale gegebenenfalls für die Einflußnahme auf bestimmte Prozesse auszunutzen. Dabei wirkt sich insbesondere das gegenüber bekannten Lösungen extrem kurze Ansprechverhalten im Millisekundenbereich des erfindungsgemäßen Systems positiv aus. Dies wird durch die Herstellbarkeit sehr dünner Schichten unter Druckeinfluß mit guter Haftung und Resistenz erreicht. Es können aber auch verschiedenste Analysen durchgeführt und unterstützt werden, wobei ein Beispiel die Untersuchung von Bodenproben ist.

Das erfindungsgenäße sensitive Einschichtsystem kommt ohne zusätzliche Haftvermittler- und Schutzschichten aus. Dies wird vorteilhaft durch formgerechte Polymerisation, -kondensation oder Härtung und nachträgli*che* Homogenisierung des Indikator-Matrix-Systems auf dem Substrat erreicht. Als Substrat kann dabei vorzugsweise eine optische Faser oder ein optisch transparentes oder reflektierendes Substrat dienen.

Ein erfindungsgemäß herstellbarer faseroptischer Applikator für ein Sensorsystem zur optischen Bestimmung einer Konzentration oder des Partialdruckes eines Analyten, durch Absorption, Lumineszenz oder Lumineszenzlöschung eines in einem permeablen Matrixmaterial immobilisierten Indikators zeichnet sich vorteilhaft dadurch aus, daß eine gute zeitliche Beständigkeit und eine Beständigkeit im Einsatzmedium auch in strömenden Flüssigkeiten, ferner ein für eine gute Auflösung ausreichender Signalpegel, geringe Ansprechzeiten, sehr geringe Exemplarstreuung der mit verschiedenen Applikationen gemessenen Werte und nicht zuletzt eine einfache Herstellung erreicht wurden.

Die Erfindung wird im folgenden anhand eines Ausführungsbeispieles näher erläutert.

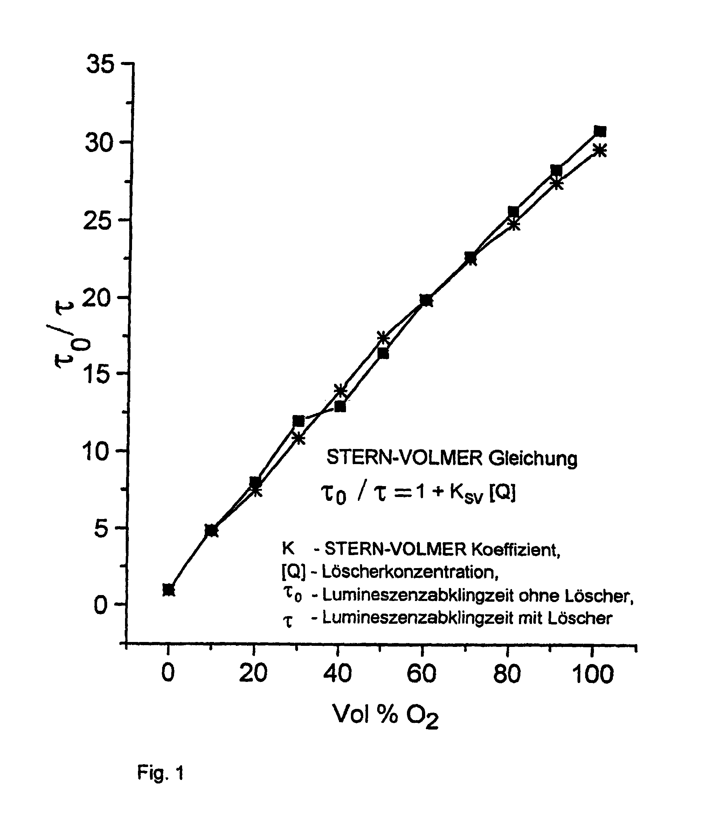

In der zugehörigen Zeichnung zeigt
- Fig. 1: in graphischer Darstellung die Sensorkennlinie des Einschichtsystems nach Herstellung und nach viermonatiger Standzeit.

Zur Herstellung des Applikators wird ein geeignetes Füllmaterial, wie Kieselgel, mit einer Lösung des Indikators in einem geeigneten Lösungsmittel behandelt. Nach Adsorption des Indikators am Füllmaterial wird überflüssiges Lösungsmittel entfernt. Die gewünschte Menge des Füllmaterials wird in ein Prepolymer oder plastifiziertes Polymer, welches vorzugsweise nach dem Aushärten für den zu bestimmenden Stoff permeabel ist, eingemischt und die Masse in eine Form mit einem Druck, der in Verbindung mit der Geometrie und Größe der Form die Schichtdicke und Schichtform vorgibt, auf das Substrat gepreßt. Die Druckeinwirkung kann aber auch durch andere geeignete Verfahren, z.B. durch die Verwendung profilierter Walzen oder Pressen erfolgen. Es ist somit eine Indikator-Matrix-Schicht mit einer definierten Dicke und Form auf dem Substrat herstellbar.

Bei diesem Beispiel erfolgt nach dem Aushärten des Polymers eine Homogenisierung der Indikatorverteilung durch Quellen der auf dem Substrat befindlichen Schicht in einer Lösung des gleichen Indikators sowie abschließendes Abspülen mit Lösungsmittel und Trocknen.

Die nachstehend beschriebene, bevorzugte Ausführungsform bezieht sich auf einen Applikator für ein optisches Sensorsystem zur Bestimmung der Sauerstoffkonzentration bzw. des Sauerstoffpartialdruckes durch Lumineszenzlöschung einer in Polysiloxan immobilisierten Ruthenium - α - Diaminverbindung.

Ein Kieselgel geeigneter Konsistenz wird in einer 10⁻⁴ molaren Lösung Ru(4,7ph₂phen)₃Cl₂ · 5 H₂O in Methylenchlorid bis zu deren Entfärbung behandelt.

Nach Trocknung des Kieselgels werden entsprechende Gewichtsteile Kieselgel und entsprechende Gewichtsteile Polydimethylsiloxan-Prepolymer gut gemischt und in Preßformen gestrichen. Danach wird das Substrat mit einem Druck von 15 · 10⁴ Pa in die Formen gepreßt. Über den Druck läßt sich die Folienstärke entsprechend einstellen. Die verwendete Form sollte so ausgebildet sein, daß auch das Substrat definiert aufgenommen und gehalten werden kann, so daß sich die sensitive Schicht in der gewünschten Form, Lage und Dicke ausbildet.

Nach dem Aushärten des Polydimethylsiloxans werden die Überzüge einer nachträglichen Quellung in einer indikatorhaltigen Methylenchloridlösung unterzogen und anschließend gründlich gespült und getrocknet.

Das Substrat ist im Ergebnis mit einem gut haftenden, auch in Lösungen sehr stabilen Indikator-Matrix-Film überzogen, der die eigentliche sensitive Schicht bildet.

Das Substrat sollte vorteilhaft optisch transparent oder reflektierend sein, um Verluste zu vermeiden.

Vorteilhaft kann als Substrat eine optische Faser oder ein Faserbündel verwendet werden. Es kann aber auch als eine optische transparente Platte oder ein optisch transparenter Körper oder reflektierender Körper in der Art einer Linse, GRIN-Linse oder eines Prismas ausgebildet sein. Es kann ebenfalls ein integriertes optisches System sein, das aus mehreren geeigneten optischen Elementen besteht. Wie aus Fig. 1 ersichtlich, ist die Sensorkennlinie (Stern Volmer - Gleichung) einer derartigen Schicht, abgeschieden auf einer Glasfaser mit 400 µm Kerndurchmesser, zum einen unmittelbar nach der Herstellung und zum anderen nach Ablauf von vier Monaten dargestellt.

## Patentansprüche

1. Verfahren zur Herstellung eines sensitiven Einschichtsystems zur Messung der Konzentration von Analyten, bei dem ein Fluoreszenzindikator in einer für das zu messende Analyt permeablen Polymermatrix in Anwesenheit eines Füllstoffes aus Kieselgel oder porösem Glas immobilisiert wird, **dadurch gekennzeichnet,**
**daß** der Fluoreszenzindikator an einen Füllstoff adsorbiert und dem permeablen Matrixmaterial beigemischt,
das Gemisch unter Druckeinwirkung die Schichtdicke und Schichtform vorgebend, auf ein Substrat aufgebracht; das Matrixmaterial polymerisiert, polykondensiert oder ausgehärtet und die Schicht durch Quellung mit einem den Fluoreszenzindikator lösenden Lösungsmittel homogenisiert wird.

2. Verfahren nach Anspruch 1, **dadurch gekennzeichnet, daß** das Gemisch mit einem Anpreßdruck von 12 bis 20 x 10⁴ Pa auf das Substrat gepreßt wird.

3. Verfahren nach Anspruch 1 oder 2, **dadurch gekennzeichnet, daß** das Gemisch aus Fluoreszenzindikator, Füllstoff und permeablem Matrixmaterial in eine Form gepreßt wird, daß sich die sensitive Schicht auf dem Substrat in der gewünschten Form, Lage und Dicke ausbildet.

4. Verfahren nach einem der Ansprüche 1 bis 3, **dadurch gekennzeichnet, daß** für die Quellung des permeablen Matrixmaterials eine fluoreszenzindikatorhaltige Lösung mit einer 10⁻ ¹ bis 10⁻⁶ molaren Konzentration verwendet wird.

5. Sensitives Einschichtsystem hergestellt mit einem Verfahren nach einem der Ansprüche 1 bis 4, **dadurch gekennzeichnet, daß** die sensitive Schicht eine Gesamtkonzentration der Fluoreszenzindikatoren in der permeablen Matrix von 10⁻¹ bis 10⁻⁶ mol/l aufweist und der Füllstoff - Kieselgel oder poröses Glas - einen Anteil zwischen 5 und 65 Gew.% in der Matrix hat.

6. Einschichtsystem nach Anspruch 5, **dadurch gekennzeichnet, daß** zur Bestimmung der Sauerstoffkonzentration der Fluoreszenzindikator ein Ruthenium - Diaminkomplex ist.

7. Einschichtsystem nach Anspruch 5 oder 6, **dadurch gekennzeichnet, daß** die permeable Matrix aus Polysiloxan, vorzugsweise Polydimethylsiloxan gebildet ist.

8. Einschichtsystem nach einem der Ansprüche 5 bis 7, **dadurch gekennzeichnet, daß** die sensitive Schicht auf einem optisch transparenten oder reflektierenden Substrat ausgebildet ist.

9. Einschichtsystem nach einem der Ansprüche 5 bis 8, **dadurch gekennzeichnet, daß** das Substrat, eine optische Faser, ein solches Faserbündel, eine Platte, ein Körper, eine Linse, eine GRIN-Linse, ein Prisma oder eine integriert optische Struktur ist.

## Claims

1. Method of manufacturing a single-layer system for measuring the concentration of analytes, in which a fluorescence indicator is immobilised in a polymer matrix permeable to the analyte to be measured, in the presence of a filler material of silica gel of porous glass,
**characterised in that**
the fluorescence indicator is adsorbed on to a filler material and mixed with permeable matrix material, the mixture is applied under the action of pressure predetermining the layer thickness and layer shape on to a substrate; the matrix material is polymerised, polycondensed or hardened and the layer is homogenised by swelling with a solvent dissolving the fluorescence indicator.

2. Method according to claim 1,
**characterised in that** the mixture is compressed on to the substrate with an applied pressure of 12 to 20 x 10⁴ Pa.

3. Method according to claim 1 or 2,
**characterised in that** the mixture or fluorescence indicator, filler material and permeable matrix material is extruded into a mould, in such a way that the sensitive layer is formed on the substrate in the desired shape, position and thickness.

4. Method according to claim 1 to 3,
**characterised in that** a solution containing fluorescence indicator at a molar concentration of 10⁻¹ to 10⁶ is used for swelling the permeable matrix material.

5. Sensitive-single layer system produced by a method according to one of claims 1 to 4,
**characterised in that** the sensitive layer has a overall concentration of the fluorescence indicators in the permeable matrix of 10⁻¹ to 10⁶ mol/l, and
the filler material - silica gel or porous glass - is present in a proportion between 5 and 65% by weight in the matrix.

6. Single-layer system according to claim 5,
**characterised in that**, in order to determine the oxygen concentration, the fluorescence indicator is a rutheniumdiamine complex.

7. Single-layer system according to claim 5 or 6,
**characterised in that** the permeable matrix is formed from polysiloxane, preferably polydimethylsiloxane.

8. Single-layer system according to one of claims 5 to 7 **characterised in that** the sensitive layer is formed on an optically transparent of reflective substrate.

9. Single-layer system according to one of claims 5 to 8, **characterised in that** the substrate is an optical fibre, a bundle of optical fibres, a plate, a member, a lens, a GRIN lens, a prism or an integrated optical structure.

## Revendications

1. Procédé permettant de fabriquer un système à une couche sensible pour mesurer la concentration d'analytes, dans lequel un indicateur de fluorescence est immobilisé dans une matrice polymère perméable à l'analyte à mesurer en présence d'une matière de charge constituée de gel de silice ou d'un verre poreux, **caractérisé en ce que** l'indicateur de fluorescence est adsorbé au niveau d'une matière de charge et mélangé avec la matière de matrice perméable,
le mélange est placé sur un substrat sous l'effet de la pression, en indiquant l'épaisseur de la couche et la forme de la couche, la matière de la matrice est polymérisée, polycondensée ou durcie et la couche est homogénéisée par gonflement avec un dissolvant qui dissout l'indicateur de fluorescence.

2. Procédé selon la revendication 1, **caractérisé en ce que** le mélange est comprimé sur le substrat avec une pression de contact comprise entre 12 et 20 x 10⁴ Pa.

3. Procédé selon la revendication 1 ou 2, **caractérisé en ce que** le mélange constitué de l'indicateur de fluorescence, de la matière de charge et de la matière de matrice perméable est comprimé sous une forme telle que la couche sensible se forme sur le substrat en présentant les forme, position et épaisseur souhaitées.

4. Procédé selon l'une quelconque des revendications 1 à 3, **caractérisé en ce que**, pour le gonflement de la matière de matrice perméable, on utilise une solution contenant un indicateur de fluorescence présentant une concentration molaire comprise entre 10⁻¹ et 10⁻⁶.

5. Système à une couche sensible fabriqué avec un procédé selon l'une quelconque des revendications 1 à 4, **caractérisé en ce que** la couche sensible présente une concentration totale des indicateurs de fluorescence dans la matrice perméable comprise entre 10⁻¹ et 10⁻⁶ mol/l et la matière de charge - gel de silice ou verre poreux - représente une teneur comprise entre 5 et 65 % en poids dans la matrice.

6. Système à une couche selon la revendication 5, **caractérisé en ce que**, pour déterminer la concentration en acides, l'indicateur de fluorescence est un complexe ruthénium / diamine.

7. Système à une couche selon la revendication 5 ou 6, **caractérisé en ce que** la matrice perméable est constituée de polysiloxane, de préférence du polydiméthylsiloxane.

8. Système à une couche selon l'une quelconque des revendications 5 à 7, **caractérisé en ce que** la couche sensible est formée sur un substrat transparent ou réfléchissant.

9. Système à une couche selon l'une quelconque des revendications 5 à 8, **caractérisé en ce que** le substrat est une fibre optique, un faisceau de fibres optiques, une plaque, un corps, une lentille, une lentille GRIN, un prisme ou une structure optique intégrée.
